## Europäisches Patentamt
## European Patent Office
## Office européen des brevets

(11) Numéro de publication: **0 094 274**
**B1**

(12) **FASCICULE DE BREVET EUROPEEN**

(45) Date de publication du fascicule du brevet: **07.12.88**

(51) Int. Cl.⁴: **G 02 B 7/02**, G 02 B 6/42

(21) Numéro de dépôt: **83400763.5**

(22) Date de dépôt: **18.04.83**

(54) **Procédé d'assemblage d'un dispositif optique contenant un laser semi-conducteur, dispositif et banc de montage de mise en oeuvre.**

(30) Priorité: **29.04.82 FR 8207424**

(43) Date de publication de la demande:
**16.11.83 Bulletin 83/46**

(45) Mention de la délivrance du brevet:
**07.12.88 Bulletin 88/49**

(84) Etats contractants désignés:
**DE GB IT NL SE**

(56) Documents cités:
**EP-A-0 021 473**
**EP-A-0 030 108**
**WO-A-79/00099**
**US-A-4 184 741**
**US-A-4 290 667**

**INSTITUTE OF ELECTRONICS AND COMMUNICATION ENGINEERS OF JAPAN, INTERNATIONAL CONFERENCE ON INTEGRATED OPTICS AND OPTICAL FIBRE COMMUNICATION, 1977, Technical digest, 18-20 juillet 1977, pages 351-354, Tokyo, JP. N. SUZUKI et al.: "A new demountable connector developed for a trial optical transmission system"**

(73) Titulaire: **THOMSON-CSF**
**173, Boulevard Haussmann**
**F-75379 Paris Cédex 08 (FR)**

(72) Inventeur: **Thirouard, Michel**
**THOMSON-CSF SCPI 173, bld Haussmann**
**F-75379 Paris Cedex 08 (FR)**
Inventeur: **Arquie, Louis**
**THOMSON-CSF SCPI 173, bld Haussmann**
**F-75379 Paris Cedex 08 (FR)**

(74) Mandataire: **Grynwald, Albert et al**
**THOMSON-CSF SCPI 19, avenue de Messine**
**F-75008 Paris (FR)**

Courier Press, Leamington Spa, England.

EP 0 094 274 B1

# Description

La présente invention concerne un dispositif optique contenant un laser semiconducteur.

En effet, le problème se pose de réaliser un module laser émettant un faisceau de lumière parallèle référencé par rapport à un axe déterminé, et notamment d'associer un laser à un objectif.

Il est connu de relier les éléments dont sont solidaires le laser et l'objectif par différents moyens d'assemblage qui peuvent être par exemple des vis ou de la colle.

On peut, en effet, positionner la face émettrice du laser semiconducteur au foyer d'un objectif ayant, premièrement une ouverture numérique suffisante et, deuxièmement un axe optique confondu avec son axe mécanique.

Dans un tel dispositif à laser on positionne le laser par rapport à l'objectif selon les différents axes de coordonnées d'un trièdre orthonormé d'axes Ox, Oy et Oz et l'assemblage des éléments dont sont solidaires le laser et l'objectif est réalisé par collage.

L'invention concerne un tel dispositif optique de projection d'un faisceau collimaté d'énergie rayonnante du type comprenant: une source laser à semiconducteur dont la zone émissive émet un faisceau divergent de cette énergie rayonnante et un objectif collimateur destiné à convertir le faisceau divergent en ce faisceau collimaté, la monture de l'objectif comportant un alésage définissant un axe mécanique de référence confondu avec l'axe optique, la source étant montée à l'extrémité d'un socle qui présente une paroi latérale cylindrique et qui est relié par emmanchement dans l'alésage de la monture de l'objectif et le socle est rendu solidaire de la monture de l'objectif par un joint rigide de colle postérieuremennt au réglage tridirectionnel lorsque le centre de la zone émissive coïncide avec le foyer arrière situé sur l'axe optique de l'objectif. Un dispositif de ce type est décrit dans le brevet européen 21473. L'invention se distingue de ce dispositif par des moyens permettant un réglage aisé. Elle est caractérisée en ce qu'un joint torique souple est en contact avec le socle et la monture et permet un jeu mécanique suffisant pour effectuer le réglage de positionnement selon trois directions orthogonales dont l'une est parallèle à l'axe mécanique.

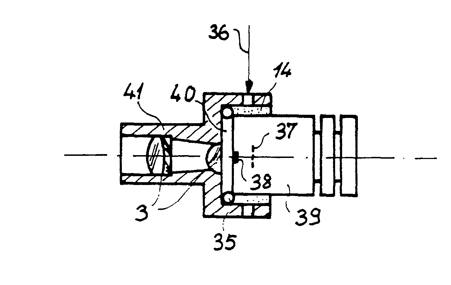

L'invention sera mieux comprise et d'autres caractéristiques apparaîtront à l'aide de la description qui suit en référence à la figure unique annexée qui illustre le dispositif optique de l'invention.

Le dispositif optique contient un laser semiconducteur émettant un faisceau de lumière parallèle, référencé par rapport à un axe déterminé.

On positionne la zone émettrice du laser semiconducteur au foyer d'un objectif ayant, premièrement une ouverture numérique suffisante et, deuxièmement un axe optique confondu avec cet axe déterminé. L'axe mécanique de l'élément qui contient l'objectif doit donc être confondu avec l'axe optique.

Ce positionnement étant effectué, il faut alors assembler le laser et l'objectif et ceci est réalisé par collage.

Dans l'assemblage représenté sur la figure, le boîtier du laser 38 présente une partie cylindrique 39 qui s'emmanche dans un alésage 40 solidaire d'un premier objectif 3, l'axe mécanique de cet alésage étant confondu avec l'axe optique de l'objectif 3.

Il y a entre la partie cylindrique 39 du boîtier du laser et l'alésage de la monture 41 de l'objectif 3 un jeu mécanique suffisant pour effectuer le réglage X, Y, Z. Ce jeu est celui d'un joint torique souple 35. Ce jeu peut être de l'ordre de 500 micromètres par exemple.

Le laser étant positionné selon les axes Ox, Oy, Oz par rapport au premier objectif, on immobilise ce positionnement en injectant en 36 dans le jeu ci-dessus cité un volume suffisant de colle 14.

On dépose donc une bague de colle 14 entre la partie cylindrique 39 du laser et l'alésage de la monture de l'objectif 41 qui est représenté avec trois lentilles à titre d'exemple indicatif, mais il serait tout aussi possible d'utiliser une lentille sphérique de qualité.

Sur la figure dans la zone arrière de partie émissive 38 du laser, une photodiode 37 a été disposée qui permet, du fait de l'émission du laser semiconducteur par sa face arrière, de contrôler par contre-réaction la puissance d'émission de ce laser.

Sur la figure l'arrière de la partie cylindrique 39 du boîtier du laser a été usinée; en effet celle'ci joue le rôle d'un radiateur qui permet de dissiper la chaleur.

Dans une variante préférée la bague de colle 14 peut être déposée avant les réglages selon les axes Ox, Oy et Oz, si l'on utilise une colle à polymérisation pas trop rapide qui se solidifie donc une fois les réglages terminés. On utilise une colle ne présentant pas de rétreint, c'est-à-dire pas de variation de dimensions à la polymérisation.

Le réglage de positionnement étant rapide, c'est-à-dire de l'ordre de la minute. On peut utiliser une colle polymérisant en plus de trois minutes par exemple.

A titre d'exemple non limitatif on peut utiliser une colle de type "Araldite" à prise rapide de la Société CIBA-GEIGY.

Ainsi on peut obtenir un module laser qui peut être assemblé de façon entièrement automatique. Le dispositif optique obtenu assemblé simplement délivre un faisceau très peu divergent dont l'axe optique est confondu avec l'axe mécanique de l'objectif, et ce dispositif optique est d'un encombrement très réduit.

Dans beaucoup de montages optiques, notamment dans le domaines des têtes optiques intégrées, il y a un besoin de sources lumineuses émettant des faisceaux parallèles et référencés pour des raisons d'interchangeabilité, de facilité de maintenance d'alignement. Le module laser réalisé selon le procédé décrit ci-dessus répond bien à ces exigences.

**Revendications**

1 Dispositif optique de projection d'un faisceau collimaté d'énergie rayonnante du type comprenant: une source laser (38) à semiconducteur dont la zone émissive émet un faisceau divergent de ladite énergie rayonnante et un objectif collimateur destiné à convertir le faisceau divergent en ledit faisceau collimaté; la monture (3, 41) de l'objectif comportant un alésage définissant un axe mécanique de référence confondu avec l'axe optique, la source (38) étant montée à l'extrémité d'un socle (39) qui présente une paroi latérale cylindrique et qui est reliée par emanchement dans l'alésage de la monture (3, 41) de l'objectif et le socle étant rendu solidaire de la monture (3, 41) de l'objectif par un joint rigide de colle postérieurement à un réglage tridirectionnel, lorsque le centre de la zone émissive coïncide avec le foyer arrière situé sur l'axe optique de l'objectif, caractérisé en ce qu'un joint torique souple (35) est en contact avec le socle (39) et la monture (41) et permet un jeu mécanique suffisant pour effectuer le réglage de positionnement selon trois directions orthogonales dont l'une est parallèle à l'axe mécanique.

2. Dispositif selon la revendication 1, caractérisé en ce que le joint torique est en contact avec un rebord annulaire plat de la monture (41) qui est constitué par le fond de l'alésage de ladite monture.

3. Dispositif selon la revendication 2, caractérisé en ce que le collage (14) est obtenu par l'injection d'un volume de colle dans l'espace séparant l'alésage et la paroi cylindrique (39).

4. Dispositif selon la revendication 1, caractérisé en ce que l'émission de la source (38) est contrôlée par une photodiode (37).

**Patentansprüche**

1. Optische Projektionsvorrichtung für einen kollimatierten Energiestrahl, mit einer Halbleiterlaserquelle (38), deren Emissionszone einen divergierenden Energiestrahl aussendet, und mit einem Kollimationsobjektiv, das zur Umwandlung des divergierenden Strahls in einen kollimatierten Strahl bestimmt ist, wobei die Fassung (3, 41) des Objektivs eine Bohrung aufweist, die eine mit der optischen Achse zusammenfallende mechanische Bezugsachse definiert und wobei die Quelle (38) am Ende eines Sockels (39) montiert ist, der eine zylindrische Seitenwand aufweist und der in die Bohrung der Fassung (3, 41) des Objektivs hineingesteckt ist sowie an der Fassung (3, 41) des Objektivs nach einer Justierung in drei Richtungen über eine steife Dichtung aus Klebstoff befestigt wird, wenn das Zentrum der Emissionszone mit dem rückwärtigen Brennpunkt, der auf der optischen Achse des Objektivs liegt, zusammenfällt, dadurch gekennzeichnet, daß eine nachgiebige Torusdichtung (35) mit dem Sockel (39) und der Fassung (41) in Kontakt steht und ein ausreichendes mechanisches Spiel für die Justierung der Lage gemäß den drei zueinander senkrechten Richtungen ermöglicht, von denen eine Richtung zur mechanischen Achse parallel verläuft.

2. Vorrichtung nach Anspruch 1, dadurch gekennzeichnet, daß die torusförmige Dichtung mit einem ringförmigen flachen Rand der Fassung (41) in Kontakt steht, wobei dieser Rand durch den Boden der Bohrung in der Fassung gebildet wird.

3. Vorrichtung nach Anspruch 2, dadurch gekennzeichnet, daß das Verkleben (14) durch Einspritzen einer Menge Klebstoff in den Raum zwischen der Bohrung und der zylindrischen Wand (39) erfolgt.

4. Vorrichtung nach Anspruch 1, dadurch gekennzeichnet, daß die Emission der Quelle (38) von einer Fotodiode (37) kontrolliert wird.

**Claims**

1. An optical device for projecting a collimated beam of radiating energy, comprising a semiconductor laser source (38) the emission area of which emits a divergent beam of said radiating energy, and a collimator lens intended to convert the divergent beam into said collimated beam, the mount (3, 41) of the lens comprising a bore defining a mechanical reference axis which coincides with the optical axis, the source (38) being mounted at the end of a base (39) having a lateral cylindrical wall and being connected by fitting in the bore of the mount (3, 41) of the lens, and the base being secured to the mount (3, 41) of the lens via a rigid glue connection after having performed an adjustment in three directions, as soon as the centre of the emission area coincides with the rear focus situated on the optical axis of the lens, characterized in that a resilient torus seal (35) is in contact with the base (39) and the mount (41) and leaves a sufficient mechanical play for allowing the position to be adjusted according to three orthogonal directions, one of which is parallel to the mechanical axis.

2. A device according to claim 1, characterized in that the torus seal is in contact with an annular flat edge of the mount (41), which edge is constituted by the bottom of the bore in said mount.

3. A device according to claim 2, characterized in that gluing (14) is obtained by injecting a volume of glue into the space separating the bore and the cylindrical wall (39).

4. A device according to claim 1, characterized in that the emission of the source (38) is controlled by a photodiode (37).